# EUROPÄISCHE PATENTSCHRIFT

(11) **EP 2 037 128 B1**
(45) Veröffentlichungstag und Bekanntmachung des Hinweises auf die Patenterteilung: **06.01.2010**
(21) Anmeldenummer: 08015798.5
(22) Anmeldetag: 08.09.2008
(51) Int. Cl.: F16B 5/00, E04F 15/02

(54) **Einrichtung zur Verbindung und Verriegelung zweier Bauplatten**
Device for connecting and locking two structural panels
Dispositif de raccordement et de verrouillage de deux panneaux de construction

(30) Priorität: 11.09.2007 DE 102007043308
(43) Veröffentlichungstag der Anmeldung: 18.03.2009
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- EP-B1- 1 415 056
- WO-A-2007/089186
- DE-A1-102006 011 887

## Beschreibung

Die Erfindung betrifft eine Einrichtung zur Verbindung und Verriegelung zweier Bauplatten, insbesondere Fußbodenpaneele, an ihren Längs- und/oder Querseiten in horizontaler und vertikaler Richtung durch eine im Wesentlichen vertikale Fügebewegung, wobei die Bauplatten eine Oberseite und eine Unterseite aufweisen, an ihren miteinander zu verbindenden Seitenkanten mit zueinander korrespondierenden Profilierungen versehen sind und in der Profilierung der ersten Bauplatte ein Verriegelungselement mit einem Verriegelungsvorsprung vorgesehen ist, das ein inneres Ende und ein äußeres Ende aufweist und mit seinem inneren Ende in einer Nut der ersten Bauplatte eingesetzt ist, und das mit einer in der Profilierung der zweiten Bauplatte vorgesehenen Verriegelungsvertiefung derart zusammenwirkt, dass bei der Fügebewegung die beiden Bauplatten selbsttätig in vertikaler Richtung verriegelt werden.

Eine solche Einrichtung ist beispielsweise aus der EP 1 415 056 B1 bekannt und erlaubt das Zusammenfügen zweier Fußbodenpaneele an deren Querseiten. An den Längsseiten werden die Paneele durch eine aus den Seitenkanten heraus gefräste Feder-Nut-Profilierung verbunden. Die Feder des neu anzulegenden Paneels wird dabei in die Nut eines bereits verlegten Paneels eingefügt und das neu anzulegenden Paneel dann auf den Unterboden herabgeschwenkt. An der Querseite erlaubt die Einrichtung das einfache Zusammenfügen der Paneele durch Einfügen in vertikaler Richtung mit einem abschließenden leichten Eindrücken, wobei dann der Verriegelungsvorsprung in die Verriegelungsnut einrastet. Die Verriegelung an der Querseite in horizontaler Richtung erfolgt durch eine hakenförmige Profilierung der Seitenkanten, die aus dem vollen Material heraus gefräst ist. In vertikaler Richtung werden die beiden Paneele durch den Kunststoffeinsatz verriegelt, der fest in der Profilierung der einen Bauplatte eingesetzt ist und eine seitlich abstehende federnde Lippe aufweist, die in einen Hinterschnitt, der in der Profilierung der zweiten Bauplatte (der gegenüberliegenden Seitenkante) eingearbeitet ist, einrastet.

Die Verbindung des Kunststoffeinsatzes mit der Profilierung des ersten Paneels erfolgt durch einen in horizontaler Richtung verlaufenden Steg, der in eine horizontal in die Seitenkante eingebrachte Nut eingesetzt wird. Die von dem Verriegelungselement abstehende Verriegelungslippe wird durch das neu anzulegende Paneel bei der Fügebewegung zusammengedrückt und federt wieder aus, wenn sie in Überdeckung mit dem Hinterschnitt gelangt. Die Federlippe muss recht elastisch sein, damit das selbsttätige Verrasten sicher erfolgt. Je elastischer die Federlippe ausgestaltet ist, umso geringer sind die von ihr in die entgegengesetzte Richtung aufnehmbaren Kräfte (so genannte Auszugskräfte) die gegen die Fügerichtung wirken und die Verbindung lösen. Handelsübliche Fußbodenpaneele haben eine Stärke von 6 bis 12 mm. Die seitlich in die Profilierung der Seitenkante einzubringende Nut, in der der Kunststoffeinsatz befestigt wird, muss folglich in einer Breite von 2 bis 3 mm und einer Tiefe von ca. 5 mm gefräst werden. Der 1,5 bis 3 mm dicke Kunststoffeinsatz muss dann in die Nut eingesetzt werden. Beide Arbeitsschritte müssen bei hohen Maschinengeschwindigkeiten erfolgen, was nicht unproblematisch ist. Durch die Stärke des Kunststoffeinsatzes ist die vertikale Verriegelung auf Laminatfußböden mit Stärken von größer als 10 mm begrenzt, was die Einsetzbarkeit des Verriegelungssystems weiter eingeschränkt.

Wenn zur Verriegelung eine hohe Elastizität notwendig ist, wird zum einen die Materialauswahl stark eingeschränkt, was zu erhöhten Kosten oder zu erhöhtem Fertigungsaufwand führen kann. Hohe Federkräfte der Verriegelungselemente werden dann notwendig, wenn eine sichere und dauerhafte Verriegelung gewährleistet werden soll. Da dies generell der Fall bei hochwertigen Verbindungen ist, sind die erzeugten Kräfte und Verformungen meist entsprechend hoch. Für Laminat-Fußbodenpaneele wird eine Trägerplatte aus einem Holzwerkstoff, insbesondere HDF oder MDF verwandt. Wirken auf einen Schichtstoff, wie HDF, hohe Kräfte auf kleine Bereiche längs zur Schichtrichtung, treten sehr schnell Beschädigungen, insbesondere in verjüngten Bereichen auf. Durch die hohen Federkräfte werden die Profilausformungen der Profilierung der Trägerplatte stark belastet und es kommt nicht selten zu Ausbrüchen am Trägermaterial. Dies kann dazu führen, dass Verbindungen nicht vollständig oder überhaupt nicht verriegeln. Weiterhin führen die meist großen Verformungen der Verriegelungselemente oft zu einer Schwächung, insbesondere dann, wenn die Verformung den elastischen Bereich überschreitet oder die Verformung längere Zeit andauert. Dies kann zu verminderten Rückstellkräften der Verriegelungselemente und damit zu nur unvollständigen Arretierungen führen.

Von dieser Problemstellung ausgehend soll die vorstehend beschriebene Einrichtung verbessert werden.

Zur Problemlösung zeichnet sich eine gattungsgemäße Einrichtung dadurch aus, dass das Verriegelungselement zur Ausbildung eines Verriegelungsfingers an einer von seinem äußeren Ende entfernten Stelle abknickbar ausgebildet ist, und zur Ausbildung eines Verschlusses an einer von seinem inneren Ende entfernten Stelle abknickbar ausgebildet ist, dass an der Seitenkante der ersten Bauplatte zwischen der Oberseite und der Nut ein nach außen hervorspringender Vorsprung vorgesehen ist, dass am Ende der Fügebewegung das Verriegelungselement an beiden Stellen abgeknickt ist und der Verriegelungsfinger mit dem äußeren Ende an der Unterseite des Vorsprungs an der ersten Bauplatte und mit seinem anderen Ende in die Verriegelungsvertiefung der zweiten Bauplatte eingreift und dabei der Verschluss an der Verriegelungsfläche der Verriegelungsvertiefung anliegt, wodurch beide Bauplatten in vertikaler Richtung verriegelt sind.

Durch diese Ausgestaltung ist eine sichere Verriegelung möglich, ohne dass hohe Federkräfte notwendig sind. Die Verriegelung erfolgt durch Formschluss über den Verriegelungsfinger und den hierzu abgewinkelten Verschluss.

Vorzugsweise ist das Verriegelungselement im Querschnitt im Wesentlichen L-förmig ausgebildet. Wenn das äußere Ende des Verriegelungselementes in Bezug zum inneren Ende unter Vorspannung steht, liegt der Verriegelungsfinger vor der Fügebewegung an dem Vorsprung der ersten Bauplatte an. Er befindet sich damit in einer definierten Lage, so dass die Bewegungen des Verriegelungselementes beim Abknicken während der Fügebewegung reproduzierbar sind.

Wenn das eingesetzte Verriegelungselement nicht unter Vorspannung steht kann der Verriegelungsfinger zur Einstellung einer reproduzierbaren Lage auch mit einem Haftkleber am von der Seitenkante hervorstehenden Vorsprung angeklebt werden. Die Adhäsionskräfte dürfen natürlich nur so hoch sein, dass der Verriegelungsfinger durch die Fügebewegung von der Seitenkante gelöst wird, ohne dass die Profilierung dabei beschädigt wird.

Das Verriegelungselement kann aus Kunststoff oder aus Metall bestehen.

Vorzugsweise ist das innere Ende des Verriegelungselementes in der Nut eingeklemmt. Es kann insbesondere vorzugsweise in die Nut auch eingeklebt sein.

Mit Hilfe einer Zeichnung soll ein Ausführungsbeispiel der Erfindung nachfolgend näher beschrieben werden. Es zeigt:
- Figur 1 -: zwei Bauplatten an der Verbindungsstelle in Teilansicht mit dem einge- setzten Verriegelungselement zu Füge-Beginn;
- Figur 2 -: die Darstellung nach Figur 1 zu Beginn der Verriegelung;

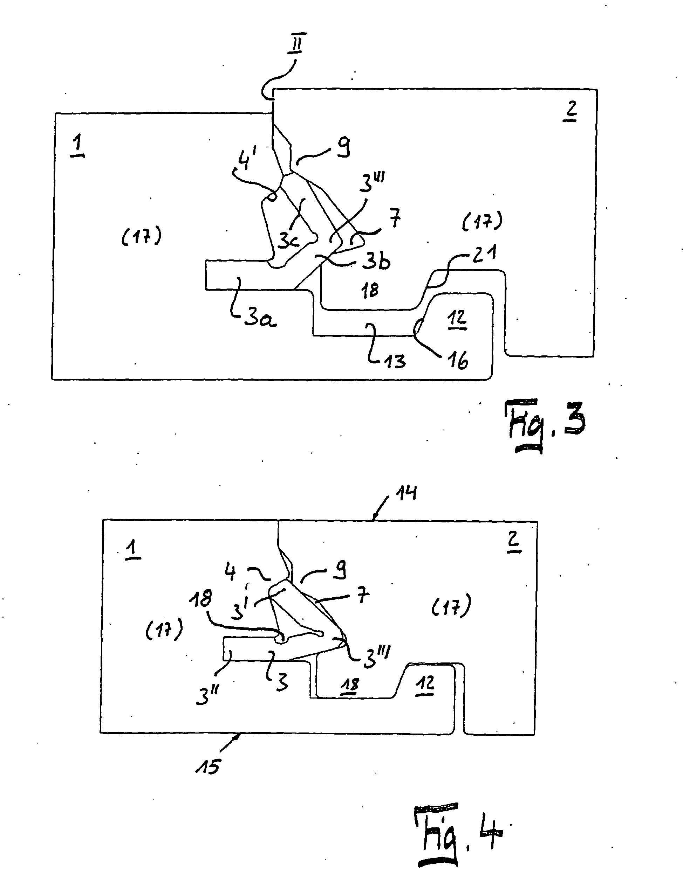

- Figur 3: die Darstellung nach Figur 1 bei weiter fortgeschrittener Verbindung der Bauplatten;
- Figur 4 -: die Darstellung nach Figur 1 bei vollständiger Verbindung und Verriege- lung der beiden Bauplatten;

Die Erfindung soll für Fußbodenpaneele erläutert werden, die über die erfindungsgemäße Einrichtung sowohl an ihren Längsseiten als auch an ihren Querseiten oder aber auch nur an einer Seite miteinander verbunden werden können. Vorgesehen ist die Einrichtung zur Verbindung von Paneelen an ihren Querseiten. Die Längsseiten werden vorzugsweise durch Einwinkeln eines neuen Paneels in ein bereits am Boden liegendes Paneel und anschließendes Absenken auf den Unterboden verbunden, so wie es in der EP 1 415 056 B1 ausführlich beschrieben ist. Die Fügebewegung an der Querseite erfolgt dann im Wesentlichen in vertikaler Richtung.

Wie die Zeichnung erkennen lässt, sind die Paneele 1, 2 an ihren Seitenkanten I, II mit zueinander korrespondierenden hakenförmigen Profilierungen 10 11 versehen. Auch wenn hier von einem ersten und einem zweiten Paneel gesprochen wird, ist jedes Paneel 1, 2 selbstverständlich identisch profiliert und die Profilierungen 10, 11 korrespondieren zueinander. Das Paneel 1 ist ausgehend von seiner Oberseite 14 profiliert und das Paneel 2 ist von seiner Unterseite 15 ausgehend profiliert. Die Profilierungen 10, 11 sind stufenförmig ausgebildet, so dass in der Profilierung 11 des ersten Paneels 1 eine nach oben offene Nut 13 mit einer sich in den Kern 17 erstreckenden horizontalen Nut 5 ausgebildet ist. Die Profilierung 10 an dem Paneel 2 bildet einen in Richtung der Unterseite 15 ragenden Absatz 18 und eine quer in die Seitenkante II eingebrachte Nut 7 aus, die im Querschnitt im Wesentlichen dreieckförmig ausgebildet ist und als Verriegelungsvertiefung dient.

Das aus Kunststoff oder Metall bestehende Verriegelungselement 3 ist im Wesentlichen L-förmig ausgebildet und mit seinem kurzen Schenkel 3a, der an dessen inneren Ende 3" beginnt, in die Nut 5 eingesetzt. Der längere Schenkel 3b, 3c liegt mit seinem äußeren Ende 3' an dem von der Seitenkante I nach außen hervorspringenden Vorsprung 4 an. An den mit 6 und 8 gekennzeichneten Stellen kann das Verriegelungselement 3 geknickt werden, so dass sich ausgehend vom äußeren Ende 3' bis zur Knickstelle 6 ein Verriegelungsfinger 3c und von der Knickstelle 6 bis zur Knickstelle 8 ein Verschluss 3b ausbildet.

Das Verriegelungselement 3 kann werksseitig in das Paneel 1 eingesetzt sein oder manuell beim Verlegen in die Nut 5 eingelegt werden.

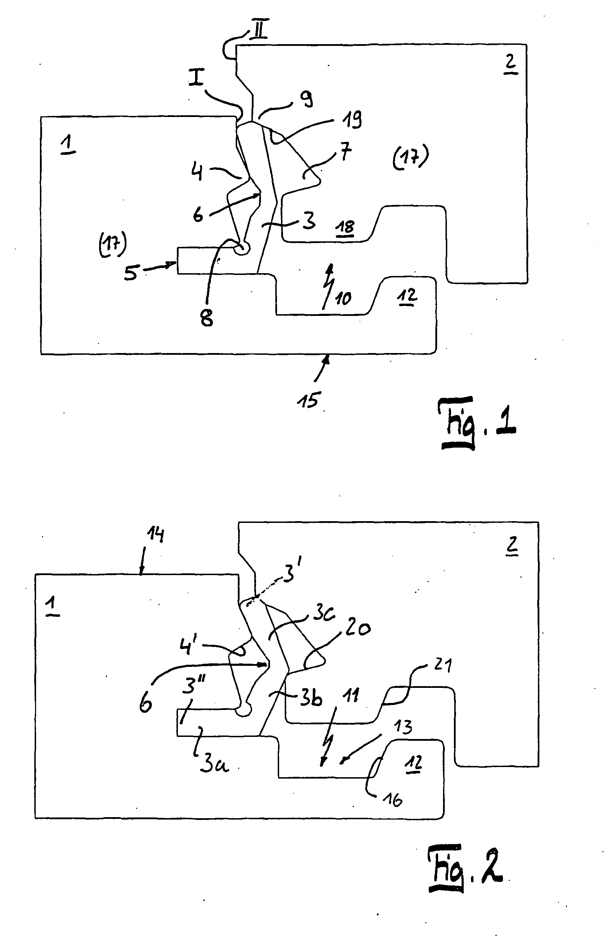

Wird das Paneel 2 zum Paneel 1 abgesenkt, stößt, wie Figur 1 zeigt, die Unterseite 19 des am oberen Ende der Nut 7 nach außen auslaufenden Vorsprung 9 an der Seitenkante II an dem äußeren Ende 3' des Verriegelungselementes 3 an. Bei der weiteren Absenkbewegung drückt der Vorsprung 9 den Verriegelungsfinger 3c an den an der Seitenkante I des Paneels 1 ausgebildeten Vorsprung 4 an. Gleichzeitig liegt das andere Ende des Verriegelungsfingers 3c im Bereich der Verriegelurigsfläche 20 der Nut 7 am Absatz 18 an (Figur 2). Dabei beginnt das Verriegelungselement 3c an der Knickstelle 6 einzuknicken. Bei der weiteren Absenkbewegung drückt der Vorsprung 9 den Verriegelungsfinger 3c am Vorsprung 4 vorbei, bis die Spitze des äußeren Endes 3' an der Unterseite 4' des Vorsprungs 4 anliegt. Dabei knickt das Verriegelungselement 3c nun auch um die Knickstelle 8. Wenn der Verriegelungsfinger 3c an der Unterseite 4' des Vorsprungs 4 anliegt, greift das dem äußeren Ende 3' gegenüberliegende Ende 3''' des Verriegelungsfingers 3c in die Verriegelungsnut 7 ein. Gleichzeitig liegt der Verschluss im Bereich des Endes 3''' an der Verriegelungsfläche 20 der Nut 7 an und es wird eine formschlüssige Verriegelung zwischen den Bauplatten 1 und 2 erreicht. Durch die reproduzierbare Knickbewegung des Verriegelungselementes 3 ist es möglich, eine höhenversatzfreie Anlage der Seitenkanten I. II an der Fügestelle erreichen.

Die Verriegelung in horizontaler Richtung erfolgt über die hakenförmige Profilierung 10, 11. Der Absatz 18 stützt sich in der Nut 13 ab. Die Wandung 21 am Absatz 18 und die Wandung 16 am Absatz 12 liegen aneinander an.

### Bezugszeichenliste

- 1: Paneel / Bauplatte
- 2: Paneel / Bauplatte
- 3: Verriegelungselement
- 3a: Schenkel
- 3b: Verschluss
- 3c: Verriegelungsfinger
- 3': äußeres Ende
- 3": inneres Ende
- 3''': Ende
- 4: Vorsprung
- 4': Unterseite
- 5: Nut
- 6: Stelle
- 7: Nut / Verriegelungsvertiefung
- 8: Stelle
- 9: Vorsprung
- 10: Profilierung
- 11: Profilierung
- 12: Vorsprung
- 13: Nut
- 14: Oberseite
- 15: Unterseite
- 16: Wandung
- 17: Kern
- 18: Absatz
- 19: Unterseite
- 20: Verriegelungsfläche
- 21: Wandung
- I: Seitenkante
- II: Seitenkante

## Patentansprüche

1. Einrichtung zur Verbindung und Verriegelung zweier Bauplatten (1, 2), insbesondere Fußbodenpaneele, an ihren Längs- und/oder Querseiten in horizontaler und vertikaler Richtung durch eine im wesentlichen vertikale Fügebewegung, wobei die Bauplatten (1, 2) eine Oberseite (14) und eine Unterseite (15) aufweisen, an ihren miteinander zu verbindenden Seitenkanten (I, II) mit zueinander korrespondierenden Profilierungen (10, 11) versehen sind und in der Profilierung (11) der ersten Bauplatte (1) ein Verriegelungselement (3) vorgesehen ist, das ein inneres Ende (3") und ein äußeres Ende (3') aufweist und mit seinem inneren Ende (3") in einer Nut (5) der ersten Bauplatte (1) eingesetzt ist, und das mit einer in der Profilierung (10) der zweiten Bauplatte (2) vorgesehenen Verriegelungsvertiefung (7) derart zusammenwirkt, dass bei der Fügebewegung die beiden Bauplatten (1, 2) selbsttätig in vertikaler Richtung verriegelt werden, **dadurch gekennzeichnet, dass** das Verriegelungselement (3) zur Ausbildung eines Verriegelungsfingers (3c) an einer von seinem äußeren Ende (3') entfernten Stelle (6) abknickbar ausgebildet ist, und zur Ausbildung eines Verschlusses (3b) an einer von seinem inneren Ende (3") entfernten Stelle (8) abknickbar ausgebildet ist, dass an der Seitenkante (I) der ersten Bauplatte (1) zwischen der Oberseite (14) und der Nut (5) ein nach außen hervorspringender Vorsprung (4) vorgesehen ist, dass am Ende der Fügebewegung das Verriegelungselement (3) an beiden Stellen (6, 8) abgeknickt ist und der Verriegelungsfinger (3c) mit dem äußeren Ende (3') an der Unterseite (4') des Vorsprungs (4) an der ersten Bauplatte (1) und mit seinem anderen Ende (3"') in die Verriegelungsvertiefung (7) der zweiten Bauplatte (2) eingreift und dabei der Verschluss (3b) an der Verriegelungsfläche (20) der Verriegelungsvertiefung (7) anliegt, wodurch beide Bauplatten (1, 2) in vertikaler Richtung verriegelt sind.

2. Einrichtung nach Anspruch 1, **dadurch gekennzeichnet, dass** das Verriegelungselement (3) im Querschnitt im Wesentlichen L-förmig ausgebildet ist.

3. Einrichtung nach Anspruch 2, **dadurch gekennzeichnet, dass** das äußere Ende (3') in Bezug zum inneren Ende (3") unter Vorspannung steht und der Verriegelungsfinger (3c) vor der Fügebewegung an dem Vorsprung (4) der ersten Bauplatte (1) anliegt.

4. Einrichtung nach einem oder mehreren der vorstehenden Ansprüche, **dadurch gekennzeichnet, dass** das Verriegelungselement (3) aus Kunststoff besteht.

5. Einrichtung nach einem oder mehreren der vorstehenden Ansprüche, **dadurch gekennzeichnet, dass** das Verriegelungselement (3) aus Metall besteht.

6. Einrichtung nach einem oder mehreren der vorstehenden Ansprüche, **dadurch gekennzeichnet, dass** das innere Ende (3") in der Nut (5) einklemmt ist.

7. Einrichtung nach einem oder mehreren der vorstehenden Ansprüche, **dadurch gekennzeichnet, dass** das innere Ende (3") in die Nut (5) eingeklebt ist.

## Claims

1. Device for connecting and locking two structural panels (1, 2), in particular floor panels, on their longitudinal and/or transverse sides in the horizontal and vertical direction by a substantially vertical joining movement, wherein the structural panels (1, 2) have an upper side (14) and a lower side (15), are provided, at their side edges (I, II) to be connected to one another, with mutually corresponding profilings (10, 11), and provided in the profiling (11) of the first structural panel (1) is a locking element (3) which has an inner end (3") and an outer end (3') and is inserted by its inner end (3") in a groove (5) of the first structural panel (1), and which cooperates with a locking indentation (7) provided in the profiling (10) of the second structural panel (2) in such a way that during the joining movement, the two structural panels (1, 2) are automatically locked in the vertical direction, **characterised in that** the locking element (3) is configured to be bendable at a point (6) remote from its outer end (3') to form a locking finger (3c), and is configured to be bendable at a point (8) remote from its inner end (3") to form a closure (3b), **in that** a projection (4) projecting outwardly is provided on the side edge (I) of the first structural panel (1) between the upper side (14) and the groove (5), **in that** the locking element (3) is bent at the two points (6, 8) at the end of the joining movement and the locking finger (3c) engages with the outer end (3') on the lower side (4') of the projection (4) on the first structural panel (1), and with its other end (3"') in the locking indentation (7) of the second structural panel (2) and, in the process, the closure (3b) rests on the locking face (20) of the locking indentation (7), whereby the two structural panels (1, 2) are locked in the vertical direction.

2. Device according to claim 1, **characterised in that** the locking element (3) is substantially L-shaped in cross section.

3. Device according to claim 2, **characterised in that** the outer end (3') is prestressed in relation to the inner end (3") and the locking finger (3c) rests, before the joining movement, on the projection (4) of the first structural panel (1).

4. Device according to any one or more of the preceding claims, **characterised in that** the locking element (3) consists of plastics material.

5. Device according to any one or more of the preceding claims, **characterised in that** the locking element (3) consist of metal.

6. Device according to any one or more of the preceding claims, **characterised in that** the inner end (3") is clamped in the groove (5).

7. Device according to any one or more of the preceding claims, **characterised in that** the inner end (3") is glued into the groove (5).

## Revendications

1. Dispositif de raccordement et de verrouillage de deux panneaux de construction (1, 2), en particulier des panneaux de plancher, sur leurs côtés longitudinaux et/ou transversaux dans la direction horizontale et verticale, par un mouvement d'assemblage sensiblement vertical, les panneaux de construction (1, 2) présentant une face supérieure (14) et une face inférieure (15), et étant munis de profilages (10, 11) se correspondant mutuellement sur leurs arêtes latérales (I, II) à raccorder l'une avec l'autre, et il est prévu dans le profilage (11) du premier panneau de construction (1), un élément de verrouillage (3) qui présente une extrémité intérieure (3") et une extrémité extérieure (3') et qui est inséré avec son extrémité intérieure (3") dans une rainure (5) du premier panneau de construction (1) et coopère avec un renfoncement de verrouillage (7) prévu dans le profilage (10) du deuxième panneau de construction (2) de façon que les deux panneaux de construction (1, 2) se verrouillent automatiquement dans la direction verticale lors du mouvement d'assemblage, **caractérisé en ce que** l'élément de verrouillage (3) est formé pliable à un emplacement (6) éloigné de son extrémité extérieure (3'), pour former un doigt de verrouillage (3c), et est formé pliable à un emplacement (8) éloigné de son extrémité intérieure (3"), pour former une fermeture (3b), **en ce qu'**il est prévu sur l'arête latérale (I) du premier panneau de construction (1), entre la face supérieure (14) et la rainure (5), un bossage (4) faisant saillie vers l'extérieur, **en ce qu'**à la fin du mouvement d'assemblage l'élément de verrouillage (3) est plié aux deux emplacements (6, 8) et le doigt de verrouillage (3c) avec l'extrémité extérieure (3') vient en prise sur la face inférieure (4') du bossage (4) sur le premier panneau de construction (1) et avec son autre extrémité (3"') dans le renfoncement de verrouillage (7) du deuxième panneau de construction (2) et la fermeture (3b) s'appuie alors sur la surface de verrouillage (20) du renfoncement de verrouillage (7), ce qui verrouille les deux panneaux de construction (1, 2) dans la direction verticale.

2. Dispositif selon la revendication 1, **caractérisé en ce que** l'élément de verrouillage (3) est formé en section sensiblement en forme de L.

3. Dispositif selon la revendication 2, **caractérisé en ce que** l'extrémité extérieure (3') se trouve sous précontrainte relativement à l'extrémité intérieure (3") et le doigt de verrouillage (3c) s'appuie sur le bossage (4) du premier panneau de construction (1) avant le mouvement d'assemblage.

4. Dispositif selon l'une ou plusieurs des revendications précédentes, **caractérisé en ce que** l'élément de verrouillage (3) est en matière synthétique.

5. Dispositif selon l'une ou plusieurs des revendications précédentes, **caractérisé en ce que** l'élément de verrouillage (3) est en métal.

6. Dispositif selon l'une ou plusieurs des revendications précédentes, **caractérisé en ce que** l'extrémité intérieure (3") est pincée dans la rainure (5).

7. Dispositif selon l'une ou plusieurs des revendications précédentes, **caractérisé en ce que** l'extrémité intérieure (3") est collée dans la rainure (5).
